# EUROPEAN PATENT SPECIFICATION

(11) **EP 2 800 390 B1**
(45) Date of publication and mention of the grant of the patent: **08.05.2019**
(21) Application number: 14156331.2
(22) Date of filing: 24.02.2014
(51) Int. Cl.: G06F 3/0482, G06F 3/0484, H04N 21/482, H04N 5/445, H04N 5/44, H04N 21/422

(54) **DISPLAY APPARATUS AND CONTROLLING METHOD THEREOF**
ANZEIGEVORRICHTUNG UND ZUGEHÖRIGES STEUERUNGSVERFAHREN
APPAREIL D'AFFICHAGE ET SON PROCÉDÉ DE COMMANDE

(30) Priority: 03.05.2013 KR 20130050167
(43) Date of publication of application: 05.11.2014
(73) Proprietor: Samsung Electronics Co., Ltd., Suwon-si Gyeonggi-do 443-742 (KR)
(72) Inventor: NOH, Young-joong, Gyeonggi-do (KR)
(74) Representative: Appleyard Lees IP LLP

(56) References cited:
- US-A- 5 648 824
- US-A1- 2007 133 937
- US-A1- 2011 055 760

## Description

### CROSS-REFERENCE TO RELATED APPLICATION

This application claims priority from Korean Patent Application No. 10-2013-0050167, filed in the Korean Intellectual Property Office on May 3, 2013.

### BACKGROUND

### 1. Field

Apparatuses and methods consistent with exemplary embodiments relate to a display apparatus and a controlling method thereof, and more particularly, to a display apparatus which is capable of selecting a channel using a key on the display apparatus and a controlling method thereof.

### 2. Description of the Related Art

As broadcast technology has developed, so too has the various types of broadcast content that is now provided. In addition, as consumer needs for various information, and the number of broadcast content provided increases, the number of broadcast channels used to carry and deliver the broadcast content has risen into the hundreds in number. The categories of contents provided are divided into many types including entertainment/hobby, drama, sports, kid, education, culture, news, religion, home shopping, cartoon, and so on. In addition, there may be many broadcast channels which belong to any one category, providing further indication of the remarkable growth in the number of broadcast channels which are being provided.

Further, with the development of electronic technology, various types of display apparatuses have been developed. A display apparatus may perform various functions and provide high-resolution images. Such a display apparatus may include a control input unit which selects a channel and adjusts volume. However, in contrast with the development of the display apparatus, the control input unit still maintains its original configuration.

Particularly, the control input unit has the structure where volume (-), volume (+), channel (-), channel (+), etc. are arranged in a row. When a user wishes to change channels, he or she uses channel (-) and channel (+) keys, and channels are changed one by one sequentially. When there were only several tens of channels, a user might select a channel by pressing channel input keys only a several tens of times. However, when there are hundreds of channels, as there are these days, a user needs to manipulate the input keys hundreds of times in some cases, which causes an inconvenience to the user.

US 2007/133937 discloses a control device including: a reception section for receiving a control signal from a transmission section which transmits, based on activation of N sensing portions (where N is an integer equal to or greater than two) placed in a predetermined arrangement, a control signal for giving an instruction to an apparatus to be controlled; and a control section standing by to receive a control signal transmitted from the transmission section, the control section assigning, respectively to the N or less control signals, instructions to be executed when the control signals are received.

US 5 648 824 describes a video control user interface for an interactive television system. During display of a video movie, the set-top box can cause, at the viewer's request, the television to display an icon representing a physical layout of an actuation pad on a remote control handset and one or more symbols arranged at locations relative to the icon. The symbols relate to shuttle controls for controlling viewing of the video movie.

US 2011/005760 discloses a method of providing a graphical user interface using a concentric menu.

### SUMMARY

One or more exemplary embodiments provide a display apparatus which allows a user to select a channel through a minimum number of key manipulations and a controlling method thereof.

According to an aspect of an exemplary embodiment, there is provided a display apparatus as defined by claim 1 of the claims appended hereto.

The controller may be further configured to remap each of the plurality of direction buttons with specific broadcast channels from the sub-channel group according to the user input selecting the sub-channel group by selecting the associated direction button, and select a specific broadcast channel corresponding to the selected direction button in response to the user input then selecting the direction button.

The navigation key may be at least one of a physical external key and a soft key displayed on one area of the display.

The navigation key may have a first button disposed at a center and four direction buttons disposed up, down, left, and right of the first button.

The controller may map a broadcast channel which is viewed currently on the first button in response to the broadcast channel selection mode being entered.

The user input to enter into the broadcast channel selection mode may be at least one of an input of a predetermined button and an input of predetermined combination of a plurality of buttons.

According to an aspect of another exemplary embodiment, there is provided a method for controlling a display apparatus including a non-linear navigation key having a plurality of direction buttons as defined by claim 7 of the claims appended hereto.

The method may further include remapping each of the plurality of direction buttons with specific broadcast channel from the sub-channel group according to the user input selecting the sub-channel group by selecting the associated direction button, and selecting a specific broadcast channel corresponding to the selected direction button in response to the user input then selecting the direction button.

The mapping may further include mapping a broadcast channel which is viewed currently on a first button disposed at a center of the navigation key in response to the broadcast channel selection mode being entered.

The user input to enter into the broadcast channel selection mode may be at least one of an input of a predetermined button and an input of predetermined combination of a plurality of buttons.

### BRIEF DESCRIPTION OF THE DRAWINGS

The above and/or other aspects will be more apparent by describing certain exemplary embodiments with reference to the accompanying drawings, in which:
FIG. 1 is a block diagram of a display apparatus according to an exemplary embodiment;
FIGS. 2 to 4 are views illustrating a navigation key according to various exemplary embodiments;
FIG. 5 is a view provided to explain a process of selecting a channel according to an exemplary embodiment;
FIGS. 6 and 7 are views provided to explain a navigation key on a display apparatus according to various exemplary embodiments; and
FIG. 8 is a flowchart illustrating a method for controlling a display apparatus according to an exemplary embodiment.

### DETAILED DESCRIPTION

It should be observed the method steps and system components have been represented by conventional symbols in the figure, showing only specific details which are relevant for an understanding of the present disclosure. Further, details may be readily apparent to person ordinarily skilled in the art may not have been disclosed. In the present disclosure, relational terms such as first and second, and the like, may be used to distinguish one entity from another entity, without necessarily implying any actual relationship or order between such entities.

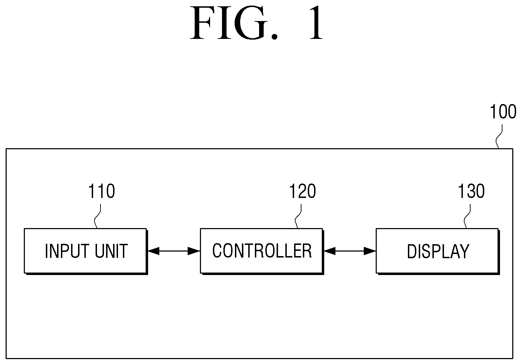

FIG. 1 is a block diagram of a display apparatus according to an exemplary embodiment. Referring to FIG. 1, a display apparatus 100 may include an input unit 110, a controller 120, and a display 130. The display apparatus 100 may be implemented as a tablet, a personal computer (PC), a notebook PC, a laptop computer, a portable multimedia player (PMP), a personal digital assistant (PDA), a smart phone, a mobile phone, a digital album, a digital television, and so on.

The input unit 110 may include a nonlinear navigation key having buttons arranged in a plurality of directions. Specifically, the nonlinear navigation key is a navigation key where function buttons are not arranged linearly. In contrast function keys arranged on the display apparatus 100 may be disposed on lower left side of the display 130 in a row. For example, a menu selection button, a volume (+) button, a volume (-) button, a channel (+) button, a channel (-) button, etc. may be disposed in a row sequentially. However, a nonlinear navigation key may have buttons arranged such as a channel and a volume control buttons are disposed in a two-dimensional manner, such as in the form of circle or cross. In some cases, the nonlinear navigation key may be disposed in a three-dimensional manner.

The navigation key may consist of four direction buttons in up, down, left, and right directions and a button at the center. The navigation key may also consist of eight direction buttons of up, down, left, right, upper left, upper right, lower left, and lower right directions, and two to four buttons at the center. Further, the navigation key may consist of a combination of four direction and eight direction button keys and one or more buttons at the center.

The configuration of the navigation key may be provided in various forms, e.g., the direction buttons and the center buttons may be connected, the direction buttons and the center buttons may be separated from each other, or the direction buttons and the center buttons may form a circle.

When a channel selection mode is entered according to a user command, the controller 120 may group a plurality of channels according to a predetermined standard and maps them to a plurality of direction buttons. The command to enter into the channel selection mode may be predetermined. For example, the command to enter into the channel mode may be pressing an okay button two times, holding the okay button for five seconds, or pressing a left button and a right button sequentially. When the display apparatus 100 enters the channel selection mode, the controller 120 groups a plurality of channels and matches each of the channels to a direction button. The display 130 displays a Graphic User Interface corresponding to a navigation key which is mapped with the grouped channels.

When a user selects a channel group, the controller 120 may group channels included in the selected channel group into a plurality of sub-channel groups according to a predetermined standard and map them to a plurality of direction buttons. In this state, when a user selects a sub-channel group, the controller 120 may group channels in the selected sub-channel group according to a predetermined standard into a plurality of sub-channel groups and map them to a plurality of direction buttons.

The controller 120 may repeat the above-described process if there are a lot of selectable channels. When the above process is repeated, one channel may be mapped with each direction button of the navigation key.

The controller 120 may map one channel to each of a plurality of direction buttons of the navigation key according to a user command. Then, when one of the plurality of direction buttons is selected, the controller 120 selects a channel corresponding to the selected button. The specific process of selecting a channel will be explained later.

The display 130 displays a GUI corresponding to the navigation key where grouped channels are mapped. When one channel group is selected according to a user selection, and channels in the selected channel group are grouped into sub-channel groups and mapped with direction buttons respectively, the display 130 may display a GUI corresponding to the mapped navigation key.

The display 130 may be implemented as various display units such as a Liquid Crystal Display Panel (LCD Panel), a Plasma Display Panel (PDP), an Organic Light Emitting Diode (OLED), a Vacuum Fluorescent Display (VFD), a Field Emission Display (FED), an Electro Luminescence Display (ELD), and so on. In addition, the display 130 may be realized as a general display panel without a touch input function, and may be realized as a touch display panel which is capable of recognizing a user manipulation using an image sensor, a proximity sensor, or a touch sensor. When the display 130 is implemented as a touch display panel, at least one touch gesture may be input through the body of a user (for example, a finger including thumb) or a input means for detection (for example, a stylus pen).

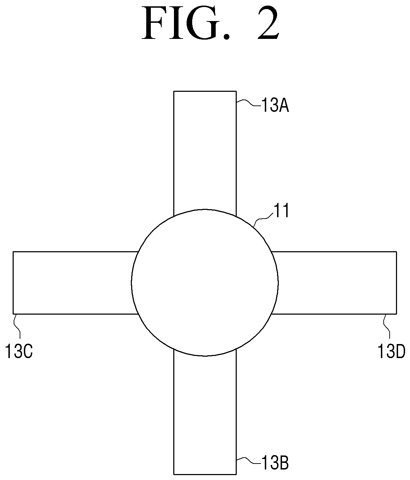

FIGS. 2 to 4 are views illustrating a navigation key according to various exemplary embodiments.

FIG. 2 illustrates a navigation key where direction buttons and a center button are formed such that they are form a single unit. A center button may be disposed at the center of the navigation key. The center button 11 may be realized as an OK/Enter button, a Return button, and so on. The navigation key illustrated in FIG. 2 includes four buttons, particularly, an upper button 13A, a lower button 13B, a left button 13C, and a right button 13D. The upper button 13A and the lower button 13B may provide a volume control function, and the left button 13C and the right button 13D may provide a channel conversion function. In addition, when the display apparatus 100 enters a specific mode, each button of the navigation key may correspond to a specific command to perform an appropriate operation.

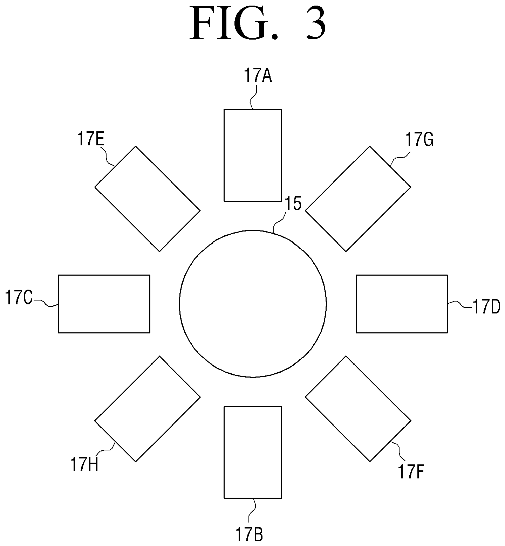

FIG. 3 illustrates a navigation key where a direction button and a center button are formed such that the buttons are separate. A center button 15 may be disposed at the center of the navigation key. The navigation key illustrated in FIG. 3 includes eight buttons, particularly, an upper button 17A, a lower button 17B, a left button 17C, a right button 17D, an upper left button 17E, a lower right button 17F, an upper right button 17G, and lower left button 17H. The upper button 17A and the lower button 17B may be configured to provide a menu conversion function, while the left button 17C and the right button 17D may be configured to provide an external apparatus selection function. Further, the upper left button 17E and the lower right button 17F may be configured to provide a channel conversion function, and the upper right button 17G and the lower left button 17H may be configured to provide a volume control function.

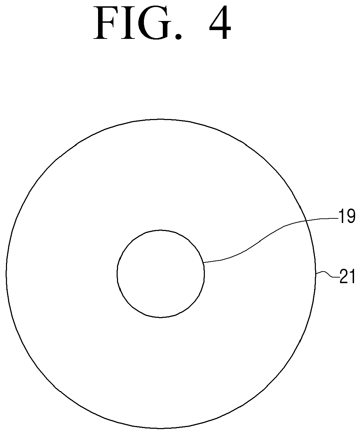

FIG. 4 illustrates a navigation key in the form of circle. A center button 19 may be disposed at the center of the navigation key. A direction button may be configured in four directions or eight directions. When the direction button is configured in four directions, if an upper part of an outer circle key 21 is pressed with reference to the center button 19, the function of the upper button is performed, and if a lower part is pressed, the function of the lower button is performed. If a left part of the outer circle key 21 is pressed with reference to the center button 19, the function of the left button is performed, and if a right part is pressed, the function of the right button is performed.

In FIGS. 2 to 4, a four direction key or an eight direction key has been described. Further, the navigation key shape and the direction buttons illustrated in FIGS. 2 to 4 may be combined with each other in accordance with at least one or more exemplary embodiments. For example, in the navigation key of FIG. 2, that has the integral navigation shape in the form of a single unit may be combined with an eight direction button embodiment to provide an single unit navigation key with eight direction buttons. In addition, according to another exemplary embodiment, the above mentioned function mapping may be mapped with a particular direction key, and also various functions may be mapped with each direction key. Further, depending on functions executed in the display apparatus 100, different functions may be mapped with the button. For example, with respect to one direction button, a volume up function may be mapped in a standby mode, and a brightness up function may be mapped in a brightness control menu.

In FIGS. 2 through 4, there is only one center button, but the center button may be divided, for example, into two to four buttons. Particularly, the center button may be divided into up and down buttons in the form of corresponding up and down semi-circles, respectively, and the upper semi-circle center button may be set to have an Enter function, and the lower semi-circle center button may be set to have a Return function. Alternatively, the center button may be divided into left and right buttons in the form of corresponding left and right semi-circles, or may be divided into three or four buttons. The command corresponding to each button may be mapped appropriately according to the functions performed in the display apparatus 100.

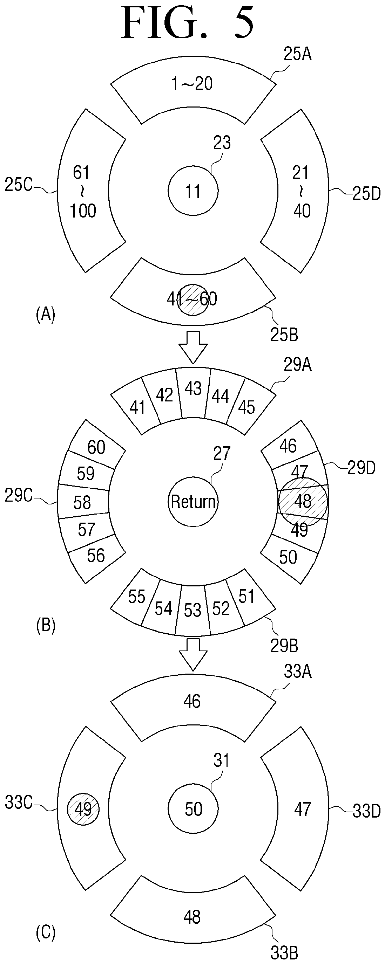

FIG. 5 is a view provided to explain a process of selecting a channel according to an exemplary embodiment. The display apparatus 100 may enter into a channel selection mode when a predetermined key is input according to a user command.

View (A) of FIG. 5 illustrates that a plurality of channels are grouped and the grouped channels are mapped with each button of a navigation key. In FIG. 5, it is assumed that there are 100 channels. When a channel selection mode is entered, the controller 120 may categorize the channels into a plurality of groups according to a predetermined standard, and may map the channels to a corresponding button of a navigation key. For example, 100 channels may be grouped into 4 groups with 25 channels in each group. In this case, the first group include channels 1-25, the second group includes channels 26-50, the third group includes channels 51-75, and the fourth group includes channels 76-100. Alternatively, 100 channels may be divided into 3 groups with 20 channels in each group and one group with 40 channels. In this case, the first group includes channels 1-20, the second group includes channels 21-40, the fourth group includes channels 41-60, and the fourth group includes channels 61-100. Each one of the four groups is mapped with one of the four buttons, particularly the up, down, left and right buttons. That is, the first group of channels 1-20 may be mapped with the upper button 25A, the second group of channels 21-40 may be mapped with the right button 25D, the third group of channels 41-60 may be mapped with the lower button 25B, and the fourth group of channels 61-100 may be mapped with the left button 25C. The center button 23 may be mapped with a channel which is being currently viewed. For example, if a user is currently watching channel 11 then channel 11 may be mapped to the center button 23.

The display apparatus 100 may display a GUI corresponding to a navigation key on one area of the display 130 in order to inform a user of a channel group which is grouped and mapped with each button. The user may select one channel group while watching the displayed GUI corresponding to the navigation key. For example, in view (A) of FIG. 5, a user may select the third group by pressing the lower button 25B.

View (B) of FIG. 5 illustrates that when one channel group is selected, a sub-channel group is mapped with each button of a navigation key. For example, the third group that the user has selected includes channels 41∼60. The controller 120 may divide channels 41∼60 into four groups again. That is, the controller 120 may set channels 41∼45 as the first group and map the channels with the upper button 29A, set channels 46∼50 as the second group and map the channels with the right button 29D, set channels 51∼55 as the third group and map the channels with the lower button 29B, and set channels 56∼60 as the fourth group and map the channels with the left button 29C.

As described above, the display 130 may display a GUI corresponding to a navigation key where grouped channels are mapped. The display 130 may display all channels when the number of channels included in one group is below a predetermined number. For example, if a predetermined number of channels is '5' and the number of channels included in one group is '5', the display 130 may display all channels as illustrated in view (B).

In this case, the center button 27 may be mapped with a Return function so as to return to the previous state. A user selects the second group by pressing the right button 29D.

View (C) of FIG. 5 illustrates that channels included in a channel group which is selected again are mapped with each button of a navigation key. For example, the second group which the user has selected includes channels 46∼50. The controller 120 may divide channels 46∼50 included in the second group again. In this case, as the number of channels included in the second group is '5', the channels may be mapped with the center button and the four direction buttons of the navigation key one by one. Accordingly, the controller 120 maps one channel to each button of the navigation key, respectively. That is, channel 46 is mapped with the upper button 33A, channel 47 is mapped with the right button 33D, channel 48 is mapped with the lower button 33B, channel 49 is mapped with the left button 33C, and channel 50 is mapped with the center button 31.

As one channel is mapped with each button of the navigation key, when a user selects one button, the display apparatus 100 selects the selected channel. That is, as the user selects channel 49 by pressing the left button 33C, the display apparatus 100 selects and displays channel 49.

The navigation key may be realized as a physical external key, or may be realized as a soft key displayed on one area of the display 130. When the navigation key is realized as a soft key, the display 130 displays a GUI in the form of a navigation key on one area as described above, and when a user touches the displayed GUI, the process of channel conversion may be performed. When the navigation key is realized as a physical external key, the display 130 may display a GUI in the form of a navigation key on one area, and a user may select the button of the physical navigation key while watching the displayed GUI.

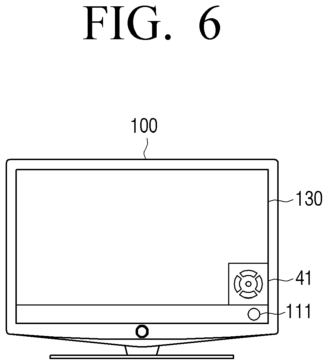

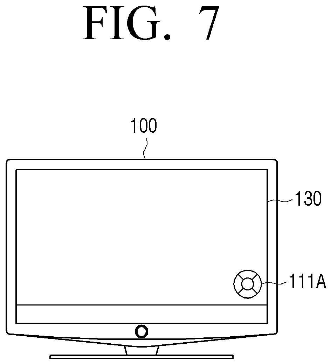

FIGS. 6 and 7 are views provided to explain a navigation key on a display apparatus according to various exemplary embodiments.

FIG. 6 illustrates a display apparatus including a navigation key which is realized in the form of a physical external key. The display apparatus 100 includes the display 130, and the input unit 110 may be disposed on the lower area of the display 130. The input unit 110 includes a navigation key 111.

A user may cause the display apparatus 100 to enter into a channel selection mode by inputting a predetermined key or a combination of a plurality of predetermined keys. For example, a predetermined key input may be pressing a center button twice in a row, or holding the center button for five seconds, etc. The combination of a plurality of predetermined keys may be input by pressing a left button and a right button sequentially, or pressing a upper button and a center button sequentially, etc. In addition, the display apparatus 100 may have a separate external button to enter into a channel selection mode. The key input to enter into the channel selection mode is an example, and the key input may be set in various ways. For example, a user may set an input pattern to enter into a channel selection mode.

When the display apparatus 100 enters into a channel selection mode, a GUI 41 corresponding to a navigation key to which grouped channels are mapped is displayed on the display 130. A user may select channels while watching the displayed GUI 41. The specific process of selecting channels has been described above with reference to FIG. 5, so further description will not be provided.

FIG. 7 illustrates a display apparatus including a navigation key which is realized as a soft key. The display apparatus 100 includes the display 130. The display 100 displays a GUI 111A of a navigation key to which grouped channels are mapped on one area of the display 130. A user may select channels by touching the displayed GUI 111A of the navigation key. The display apparatus 100 may include a separate external button to enter into a channel selection mode. Alternatively, a menu in the form of a soft key to select a channel selection mode may be displayed on one area of the display 130.

According to an exemplary embodiment, when the navigation key is realized in the form of a soft key, and all channels are displayed on the display 130 as illustrated in view (B) of FIG. 5, a user may directly select a channel by touching one of the displayed channels.

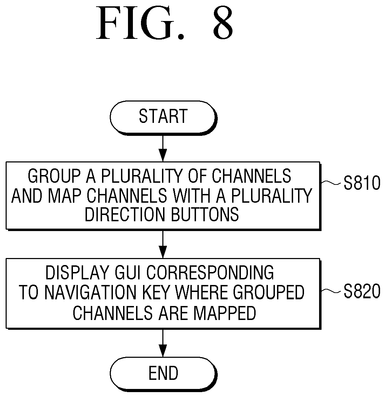

FIG. 8 is a flowchart illustrating a method for controlling a display apparatus according to an exemplary embodiment.

Referring to FIG. 8, a display apparatus groups a plurality of channels and maps them to a plurality of direction buttons (S810). For example, when the display apparatus has four direction buttons, the channels may be grouped into four groups and each group may be mapped to a corresponding direction button. According to other exemplary embodiments, the channels may be grouped such that each group includes a similar number of channels, or three groups include a certain number of channels and the other one group includes the remaining channels.

The display apparatus displays a GUI corresponding to a navigation key to which grouped channels are mapped (S820). The navigation key may be realized in the form of a physical external key or a soft key displayed on one area of the display. When the navigation key is realized as a physical external key, a user may select one button of the navigation key while watching the displayed GUI. When the navigation key is realized as a soft key, a user may select one button of the navigation key by touching the displayed GUI.

The display apparatus may group channels included in the selected group into subgroups again. By repeating the above process, one channel may be mapped with each button of the navigation key. If a user selects a button where one channel is mapped, the display apparatus may select the mapped channel.

The method for controlling a display apparatus according to various exemplary embodiments may be realized as a program and provided to the display apparatus.

For example, a channel selection mode is entered according to a user command, a non-transitory computer readable medium storing a program which performs grouping a plurality of channels according to a predetermined standard and mapping them with a plurality of direction buttons and generating a GUI corresponding to a navigation where the grouped channels are mapped may be provided.

The non-transitory recordable medium refers to a medium which may store data semi-permanently rather than storing data for a short time such as a register, a cache, and a memory and may be readable by an apparatus. Specifically, the above-mentioned various applications or programs may be stored in a non-temporal recordable medium such as CD, DVD, hard disk, Blu-ray disk, USB, memory card, and ROM and provided therein.

## Claims

1. A display apparatus (100), comprising:
a non-linear navigation key (111, 111A) including a plurality of direction buttons and configured to receive a user input;
a controller (120); and
a display (130) configured to display a graphic user interface, GUI (41, 111A),
the controller being configured to, in response to a broadcast channel selection mode being entered according to the user input, group a plurality of broadcast channels into a plurality of broadcast channel groups and map the broadcast channel groups to a corresponding plurality of the direction buttons from the plurality of direction buttons, and
the GUI corresponds to the navigation key and the grouped broadcast channels that are mapped,
the apparatus **characterized in that**:
the controller (120), in response to selection of a broadcast channel group from among the plurality of broadcast channel groups according to the user input, regroups broadcast channels included in the selected broadcast channel group into a plurality of sub-channel groups, maps the sub-channel groups onto the plurality of direction buttons instead of the broadcast channel groups and controls to display the GUI according to the regrouping.

2. The apparatus as claimed in claim 1, wherein the controller (120) is further configured to remap each of the plurality of direction buttons with specific broadcast channels from the sub-channel group according to the user input selecting the sub-channel group by selecting the associated direction button, and select a specific broadcast channel corresponding to the selected direction button in response to the user input then selecting the direction button.

3. The apparatus as claimed in one of claim 1 to claim 2, wherein the navigation key is at least one of a physical external key (111) and a soft key (111A) displayed on one area of the display (130).

4. The apparatus as claimed in one of claim 1 to claim 3, wherein the navigation key includes a first button (11) disposed at a center and four direction buttons (13A- 13D) disposed up, down, left, and right of the first button.

5. The apparatus as claimed in claim 4, wherein the controller (130) maps a broadcast channel which is viewed currently with on the first button (11) in response to the broadcast channel selection mode being entered.

6. The apparatus as claimed in one of claim 1 to claim 5, wherein the user input to enter into the channel selection mode is at least one of an input of a predetermined button and an input of predetermined combination of a plurality of buttons.

7. A method for controlling a display apparatus including a non-linear navigation key (111, 111A) having a plurality of direction buttons, the method comprising:
grouping (S810) some of a plurality of broadcast channels into a plurality of broadcast channel groups and mapping the broadcast channel groups to a corresponding plurality of the direction buttons from the plurality of direction buttons in response to a broadcast channel selection mode is entered according to a user command; and
displaying (S810) a graphic user interface, GUI, corresponding to the navigation key and the grouped broadcast channels that are mapped,
the method **characterised by** the mapping comprising:
regrouping broadcast channels included in the selected broadcast channel group into a plurality of sub-channel groups, and
mapping the sub-channel groups onto the plurality of direction buttons instead of the broadcast channel groups in response to selection of the at least one broadcast channel group from amongst a plurality of broadcast channel groups, and
the displaying comprises:
displaying the GUI according to the regrouping.

8. The method as claimed in claim 7, further comprising:
remapping each of the plurality of direction buttons with specific broadcast channel from the sub-channel group according to the user input selecting the sub-channel group by selecting the associated direction button; and
selecting a specific broadcast channel corresponding to the selected direction button in response to the user input then selecting the direction button.

9. The method as claimed in one of claim 7 to claim 8, wherein the mapping further comprises:
mapping a broadcast channel which is viewed currently on a first button disposed at a center of the navigation key in response to the broadcast channel selection mode being entered.

10. The method as claimed in one of claim 7 to claim 9, wherein the user input to enter into the broadcast channel selection mode is at least one of an input of a predetermined button and an input of predetermined combination of a plurality of buttons.

## Patentansprüche

1. Anzeigevorrichtung (100), umfassend:
eine nichtlineare Navigationstaste (111, 111A), die mehrere Richtungsschaltflächen beinhaltet und ausgelegt ist zum Empfangen einer Benutzereingabe;
eine Steuerung (120); und
eine Anzeige (130), ausgelegt zum Anzeigen einer graphischen Benutzerschnittstelle, GUI, (41, 111A),
wobei die Steuerung ausgelegt ist zum, als Reaktion darauf, dass gemäß der Benutzereingabe in einen Rundsendekanalauswahlmodus eingetreten wird, Gruppieren mehrerer Rundsendekanäle in mehrere Rundsendekanalgruppen und Abbilden der Rundsendekanalgruppen auf mehrere entsprechende Richtungsschaltflächen von den mehreren Richtungsschaltflächen, und
die GUI der Navigationstaste und den gruppierten Rundsendekanälen, die abgebildet werden, entspricht,
wobei die Vorrichtung **dadurch gekennzeichnet, ist dass**: die Steuerung (120), als Reaktion auf eine Auswahl einer Rundsendekanalgruppe von unter den mehreren Rundsendekanalgruppen gemäß der Benutzereingabe, Folgendes vornimmt: Neugruppieren von Rundsendekanälen, die in der ausgewählten Rundsendekanalgruppe enthalten sind, in mehrere Subkanalgruppen, Abbilden der Subkanalgruppen auf die mehreren Richtungsschaltflächen anstelle der Rundsendekanalgruppen und Steuern der Anzeige, die GUI gemäß der Neugruppierung anzuzeigen.

2. Vorrichtung nach Anspruch 1, wobei die Steuerung (120) ferner ausgelegt ist zum Neuabbilden von jeder der mehreren Richtungsschaltflächen mit spezifischen Rundsendekanälen aus der Subkanalgruppe gemäß der Benutzereingabe, die die Subkanalgruppe auswählt, durch Auswählen der zugeordneten Richtungsschaltfläche, und Auswählen eines spezifischen Rundsendekanals, der der ausgewählten Richtungsschaltfläche entspricht, als Reaktion auf die Benutzereingabe, dann Auswählen der Richtungsschaltfläche.

3. Vorrichtung nach einem der Ansprüche 1 oder 2, wobei die Navigationstaste eine physische externe Taste (111) und/oder eine in einem Gebiet der Anzeige (130) angezeigte Softtaste (111A) ist.

4. Vorrichtung nach einem Ansprüche 1 bis 3, wobei die Navigationstaste eine erste Schaltfläche (11), angeordnet in einem Zentrum, und vier Richtungsschaltflächen (13A-13D), angeordnet über, unter, links von und rechts von der ersten Schaltfläche, beinhaltet.

5. Vorrichtung nach Anspruch 4, wobei die Steuerung (130) einen Rundsendekanal, welcher aktuell geschaut wird, mit auf die erste Schaltfläche (11) abbildet, als Reaktion darauf, dass in den Rundsendekanalauswahlmodus eingetreten wird.

6. Vorrichtung nach einem der Ansprüche 1 bis 5, wobei die Benutzereingabe, um in den Kanalauswahlmodus einzutreten, eine Eingabe einer vordefinierten Schaltfläche und/oder eine Eingabe einer vorbestimmten Kombination von mehreren Schaltflächen ist.

7. Verfahren zum Steuern einer Anzeigevorrichtung, die eine nichtlineare Navigationstaste (111, 111A) beinhaltet, die mehrere Richtungsschaltflächen aufweist, wobei das Verfahren Folgendes umfasst:
Gruppieren (S810) einiger von mehreren Rundsendekanälen in mehrere Rundsendekanalgruppen und Abbilden der Rundsendekanalgruppen auf mehrere entsprechende der Richtungsschaltflächen von den mehreren Richtungsschaltflächen, als Reaktion darauf, dass gemäß der Benutzereingabe in einen Rundsendekanalauswahlmodus eingetreten wird; und
Anzeigen (S810) einer graphischen Benutzerschnittstelle, GUI, die der Navigationstaste und den gruppierten Rundsendekanälen entspricht, die abgebildet werden,
wobei das Verfahren **dadurch gekennzeichnet ist, dass** das Abbilden Folgendes umfasst:
Neugruppieren von Rundsendekanälen, die in der ausgewählten Rundsendekanalgruppe enthalten sind, in mehrere Subkanalgruppen, und
Abbilden der Subkanalgruppen auf die mehreren Richtungsschaltflächen anstelle der Rundsendekanalgruppen, als Reaktion auf eine Auswahl der mindestens einen Rundsendekanalgruppe von unter den mehreren Rundsendekanalgruppen, und
das Anzeigen Folgendes umfasst:
Anzeigen der GUI gemäß der Neugruppierung.

8. Verfahren nach Anspruch 7, ferner umfassend:
Neuabbilden von jeder der mehreren Richtungsschaltflächen mit spezifischen Rundsendekanälen aus der Subkanalgruppe gemäß der Benutzereingabe, die die Subkanalgruppe auswählt, durch Auswählen der zugeordneten Richtungsschaltfläche, und
Auswählen eines spezifischen Rundsendekanals, der der ausgewählten Richtungsschaltfläche entspricht, als Reaktion auf die Benutzereingabe, dann Auswählen der Richtungsschaltfläche.

9. Verfahren nach einem der Ansprüche 7 oder 8, wobei das Abbilden ferner Folgendes umfasst:
Abbilden eines Rundsendekanals, welcher aktuell geschaut wird, auf eine erste Schaltfläche, die in einem Zentrum der Navigationstaste angeordnet ist, als Reaktion darauf, dass in den Rundsendekanalauswahlmodus eingetreten wird.

10. Verfahren nach einem der Ansprüche 7 bis 9, wobei die Benutzereingabe, um in den Kanalauswahlmodus einzutreten, eine Eingabe einer vordefinierten Schaltfläche und/oder eine Eingabe einer vorbestimmten Kombination von mehreren Schaltflächen ist.

## Revendications

1. Appareil d'affichage (100), comprenant :
une touche de navigation non linéaire (111, 111A) comportant une pluralité de boutons de direction et configurée pour recevoir une saisie utilisateur ;
un contrôleur (120) ; et
un écran (130) configuré pour afficher une interface utilisateur graphique, GUI (41, 111A),
le contrôleur étant configuré pour, en réponse à l'entrée dans un mode sélection de canal de diffusion en fonction de la saisie utilisateur, regrouper une pluralité de canaux de diffusion dans une pluralité de groupes de canaux de diffusion et mettre en correspondance les groupes de canaux de diffusion avec une pluralité correspondante des boutons de direction parmi la pluralité de boutons de direction, et
la GUI correspond à la touche de navigation et aux canaux de diffusion regroupés qui sont mis en correspondance,
l'appareil étant **caractérisé en ce que** :
le contrôleur (120), en réponse à la sélection d'un groupe de canaux de diffusion parmi la pluralité de groupes de canaux de diffusion en fonction de la saisie utilisateur, regroupe des canaux de diffusion contenus dans le groupe de canaux de diffusion sélectionné dans une pluralité de sous-groupes de canaux, met en correspondance les sous-groupes de canaux avec la pluralité de boutons de direction à la place des groupes de canaux de diffusion et contrôle l'affichage de la GUI en fonction du regroupement.

2. Appareil selon la revendication 1, dans lequel le contrôleur (120) est également configuré pour remettre en correspondance chacun de la pluralité de boutons de direction avec des canaux de diffusion spécifiques issus du sous-groupe de canaux en fonction de la saisie utilisateur sélectionnant le sous-groupe de canaux en sélectionnant le bouton de direction associé, et sélectionner un canal de diffusion spécifique correspondant au bouton de direction sélectionné en réponse à la saisie utilisateur puis sélectionner le bouton de direction.

3. Appareil selon une des revendications 1 à 2, dans lequel la touche de navigation est une touche externe physique (111) et/ou une touche programmable (111A) affichée sur une zone de l'écran (130).

4. Appareil selon une des revendications 1 à 3, dans lequel la touche de navigation comporte un premier bouton (11) disposé à un centre et quatre boutons de direction (13A-13D) disposés en haut, en bas, à gauche et à droite du premier bouton.

5. Appareil selon la revendication 4, dans lequel le contrôleur (130) met en correspondance un canal de diffusion qui est actuellement vu avec sur le premier bouton (11) en réponse à l'entrée dans le mode sélection de canal de diffusion.

6. Appareil selon une des revendications 1 à 5, dans lequel la saisie utilisateur pour entrer dans le mode sélection de canal est une saisie sur un bouton prédéterminé et/ou une saisie sur une combinaison prédéterminée d'une pluralité de boutons.

7. Procédé de contrôle d'un appareil d'affichage comportant une touche de navigation non linéaire (111, 111A) ayant une pluralité de boutons de direction, le procédé comprenant :
le regroupement (S810) de certains d'une pluralité de canaux de diffusion dans une pluralité de groupes de canaux de diffusion et la mise en correspondance des groupes de canaux de diffusion avec une pluralité correspondante des boutons de direction parmi la pluralité de boutons de direction en réponse à l'entrée dans un mode sélection de canal de diffusion en fonction d'une commande d'utilisateur ; et
l'affichage (S810) d'une interface utilisateur graphique, GUI, correspondant à la touche de navigation et aux canaux de diffusion regroupés qui sont mis en correspondance,
le procédé étant **caractérisé en ce que** la mise en correspondance comprend :
le regroupement de canaux de diffusion contenus dans le groupe de canaux de diffusion sélectionné dans une pluralité de sous-groupes de canaux, et
la mise en correspondance des sous-groupes de canaux avec la pluralité de boutons de direction à la place des groupes de canaux de diffusion en réponse à la sélection de l'au moins un groupe de canaux de diffusion parmi une pluralité de groupes de canaux de diffusion, et
l'affichage comprend :
l'affichage de la GUI en fonction du regroupement.

8. Procédé selon la revendication 7, comprenant en outre :
la remise en correspondance de chacun de la pluralité de boutons de direction avec un canal de diffusion spécifique issu du sous-groupe de canaux en fonction de la saisie utilisateur sélectionnant le sous-groupe de canaux par sélection du bouton de direction associé ; et
la sélection d'un canal de diffusion spécifique correspondant au bouton de direction sélectionné en réponse à la saisie utilisateur puis la sélection du bouton de direction.

9. Procédé selon une des revendications 7 à 8, dans lequel la mise en correspondance comprend en outre :
la mise en correspondance d'un canal de diffusion qui est actuellement vu avec un premier bouton disposé à un centre de la touche de négation en réponse à l'entrée dans le mode sélection de canal de diffusion.

10. Procédé selon une des revendications 7 à 9, dans lequel la saisie utilisateur pour entrer dans le mode sélection de canal de diffusion est une saisie sur un bouton prédéterminé et/ou une saisie sur une combinaison prédéterminée d'une pluralité de boutons.
